# EUROPEAN PATENT SPECIFICATION

(11) **EP 3 013 013 B1**
(45) Date of publication and mention of the grant of the patent: **25.09.2019**
(21) Application number: 14290318.6
(22) Date of filing: 21.10.2014
(51) Int. Cl.: H04L 29/06, H04N 21/24, H04N 21/439, H04N 21/44, H04L 12/861

(54) **Networking device and method for buffer management in video streaming over a network**
Vernetzungsvorrichtung und Verfahren zur Pufferverwaltung in Video-Streaming über ein Netzwerk
Dispositif de mise en réseau et procédé de gestion de tampons dans une diffusion vidéo en continu sur un réseau

(43) Date of publication of application: 27.04.2016
(73) Proprietor: Provenance Asset Group LLC, Pittsford, NY 14534 (US)
(72) Inventor: Tang, M Siyu, 2018 Antwerp (BE); Rondao Alface, Patrice, 2018 Antwerp (BE); Vermoesen, Luc, 2018 Antwerp (BE)
(74) Representative: Abel & Imray

(56) References cited:
- EP-A1- 1 511 326
- EP-A2- 1 087 579

## Description

### Technical Field

The disclosure relates to the field of network devices for video streaming over a network between a sender and a receiver, more particularly interactive and video streaming implementing inter-stream synchronization schemes and buffer management.

### Background

Interactive and/or real-time communication is expected to be an important service in the next generation of multimedia delivery over a network (e.g. the Internet). A fundamental characteristic of today's real-time video conferencing traffic (e.g. Skype, Facetime, WebRTC, webcasting) is to share the same queue with a variety of Internet traffic, e.g. Web requests, bulk data transfer, adaptive streaming over HTTP, or other types of real-time flows.

Typically audio and video streams that are sent over the network, are buffered at the receiver. The information for these buffers need inter-stream synchronization or lip synchronization. Real-time audio/video traffic may be delivered via different networking paths and experience heterogeneous end-to-end (E2E) network delay or jitter when arriving at the receiver. Hence, audio/video streams need to be synchronized for play-out without noticeable audio/video skew. E.g. the minimum skew detectable by a human (between audio and video streams) is ±80ms.

Different solutions are proposed to solve the lip-synchronization problem.

A first solution is lip-synchronization with the assistance of the RTCP Sender Report (RTCP SR) in "Real-time Transport Protocol" (RTP) communication over the network. The RTCP SR allows the receiver to map the RTP timestamp of each stream into a common reference timebase, called the Network Time Protocol (NTP) time, which is used for audio/video playback. Often, the usage of RTP timing information is not sufficient to provide inter-stream synchronization because the difference between the E2E delay of audio and video may vary substantially.

In a second solution, separate audio and video buffers are deployed for packet de-jittering. To provide inter-stream synchronization, either the audio or the video stream is delayed at the receiver via adaptive buffer management. An example is the master-slave synchronization. Existing buffer management schemes for inter-stream synchronization typically maintain an audio jitter buffer and a video play-out jitter buffer at the receiver. In a master-slave implementation, the audio stream is considered as the master. This means the video will be delayed based on the received audio stream in order to achieve lip synchronization. Notice that a large jitter buffer impairs the interactivity of the audio/video service, while a small buffer size may degrade the audio/video quality at the receiver. The play-out time of the video stream, serving as the slave, is passively adjusted to achieve inter-stream synchronization. A synchronization agent is placed between the audio and video buffer so as to exchange and negotiate the delay accordingly. By doing so, the audio and video buffers become time synchronized.

A third solution is the dynamic master-slave synchronization (e.g. Google's WebRTC), wherein both audio and video can serve as the master stream depending on the current buffer size of the audio and video playout jitter buffers. In a first step, the current audio bₐ and video bᵥ buffer size (in ms) is checked at the receiver. Then it is calculated how much later or earlier the audio stream is compared to the video stream, i.e., whether bₐ > bᵥ or bₐ < bᵥ.

If the minimum video buffer delay is longer than the current audio buffer delay bₐ < bᵥ, it further checks if extra delay has been added to the video engine in previous round-trip-times (RTT's). If so, the extra video buffer delay is reduced before adjusting the audio buffer delay. If there is no extra video delay to remove, the audio buffer delay is increased in accordance to the video buffer delay for inter-stream synchronization.

If the minimum video buffer delay is lower than the current audio buffer delay bₐ > bᵥ, possible extra audio buffer delay is decreased or additional video buffer delay is added for synchronization. If there is extra delay in the audio buffer, the audio buffer delay is decreased, if there is no extra delay in the audio buffer, the video buffer delay is increased.

European Patent Application EP1087579A2 entitled "Gateway for Reducing Delay Jitter and Method for Data Transfer Therein" describes a gateway for interconnecting two networks, wherein data units are received from a first network, temporarily stored and outputted on the basis of a de-jittering capability of a destination terminal of a second network. EP1087579A2 discloses an embodiment wherein the data units correspond to audio data packets and video data packets, which are received and buffered in respectively an audio buffer and a video buffer. Based on measured delay times, an audio data unit is prioritized over a video data unit, or reverse.

European Patent Application EP1511326A1 entitled "Apparatus and Method for Multimedia Reproduction Using Output Buffering in a Mobile Communication Terminal" describes a multimedia reproduction apparatus that comprises several sections for dividing and parsing multimedia data into video data and other data, for buffering, and for synchronizing. Video data and audio data are outputted according to a synchronizing signal of the media delay output controller.

### Summary

A problem with existing solutions is a need for better buffer management in real-time video stream receivers in view of interactivity and quality of a network connection. Although selecting the largest buffer delay ensures inter-stream synchronization, this may compromise the interactivity of the real-time service. Unnecessary buffer delay exists regardless of the importance of the content to be played-out.

This objective is achieved, in a first aspect, by a networking device, according to independent claim 1, for buffer management in video streaming over a network. The networking device comprises a network interface for receiving one or more video streams from a network. Some of the received video streams are one or more low priority video streams containing low priority content and some of the received video streams are one or more high priority video streams containing high priority content. Further, the networking device comprises one or more low priority buffers for buffering packets of the respectively one or more low priority video streams each low priority buffer having a respective low priority buffer delay, and one or more high priority buffers for buffering packets of the respectively one or more high priority video streams, each high priority buffer having a respective high priority buffer delay. The networking device comprises a buffer synchronization agent configured to monitor buffer delays of the buffers.

In order to be able to drop packets with low-priority content for interactivity optimization, the buffer synchronization agent is configured to determine a common delay b* for the buffers, wherein b* is smaller than the monitored low priority buffer delay and greater than or equal to monitored high priority buffer delays if the monitored low priority buffer delay exceeds the other monitored buffer delays. The buffer synchronization agent is configured to enforce the determined common delay b* to the buffers, where the common delay b* is used as the low priority buffer delay of the one or more low priority buffers and as the high priority buffer delay of the one or more high priority buffers. The networking device further comprises a composer configured to combine the packets of the video buffers into the frames of a combined video stream.

The buffer synchronization agent monitors the buffer delay for the low and high priority video stream and coordinates these buffers. Instead of waiting for the arrival of a late packet with low priority content, e.g. packets from the low priority video stream, the agent decides to reduce the common buffer delay b* so as to improve the interactivity and drop these low priority packets or data. This will be executed if the monitored low priority buffer delay exceeds the other monitored buffer delays.

Hence, the common delay enforced on either of the jitter buffers makes a trade-off between the interactivity and quality degradation (cfr. distortion caused by the lost or late packets from the low priority video stream).

Diminishing packets of a low priority video stream is advantageous as this could be in favour of the quality of high priority video streams and in view of interactivity. For instance, a late video packet may correspond to less important information such as a static background. An extra delay will then not be added to the common buffer delay. Optionally, the distortion caused by the late packet can be reconstructed with error concealment. It is advantageous as video jitter buffers are adjusted adaptively based on the content (cfr. low or high priority) to be played out.

The term "networking device" in underlying disclosure should be understood as a computing device or computer which is provided with a network interface for communicating with one or more other devices via a network. Possible implementations of the networking device could comprise a computer, server, a media player, a video conferencing device, a portable device, etc.

The term "video stream" in underlying disclosure should be understood as video data, frames or packets which are continuously provided to the networking device via a network. Video data is played out at the receiver side, while video information is presented by the network to the networking device. Different video streams can be sent separately to the networking device via different network ports of the networking device, or can be aggregated and delivered through a common network port of the networking device.

One example of this video information could be captured video data which is provided in real-time to the networking device, e.g. live video streaming, interactive conferences, webcam streaming, etc. Another example could be the streaming of a recorded and stored movie. A video stream can relate to asynchronous video conversations, e.g. webinars, meeting recordings, online workshops, etc. Herein, video data is recorded and stored during a certain period, which video data can be viewed later and therefore be streamed over the network at a later instance.

The term "receiving a video stream over a network" in underlying disclosure should be understood as receiving packets or frames of a video stream provided or distributed via a network. Typically the packets are transported according to a standardized real-time media delivering protocol, such as e.g. "Real-time Transport Protocol" (RTP), "Real Data Transport" (RDT), "Real Time Streaming Protocol" (RTSP), H.323, "Session Initiation Protocol" (SIP), "MPEG Media Transport" (MMT), etc. The term "RTP port" in underlying disclosure should be understood as a port of a network interface suitable for communication via the RTP protocol or any other transport protocol as listed before.

The term "network path" in underlying disclosure should be understood as a temporally link or connection between a sender and the networking device. The network path is subject to a network delay, packet loss, etc.

The term "quality of a video stream" in underlying disclosure should be understood as the quality of frames or packets of the video stream, whereby the quality can be dependent on QoS (Quality of Service), an encoding level, spatial resolution, bitrate, PSNR (Peak Signal-to-Noise Ratio), etc.

The term "composer" in underlying disclosure should be understood as a device enabled to combine two or more video streams into a video stream or so-called combined video stream. A video player subsequently plays the combined video stream and/or an audio player synchronously plays the received audio stream accompanying the video stream. The received media (video and/or audio) can be played immediately without downloading the whole or chunks of video and/or audio stream. Video data, frames or packets of a low or high priority video stream comprise partial information of the combined video stream. In a preferred embodiment, video stream content corresponds to video data of a certain priority region.

The term "priority content" in underlying disclosure should be understood as a region, area, collection of areas or other content in a video frame with a certain associated priority. A high priority region could e.g. correspond to a talking person, while a low priority region could correspond to a static background. For instance, low and/or high priority content can be determined by video analysis based on background subtraction, motion estimation, temporal activity and/or saliency estimation. In another example, low and/or high priority content can be determined by the receiver or networking device.

The term "buffer", "playout buffer" or "(de)jitter buffer" in underlying disclosure should be understood as a buffer, which is used to counter jitter introduced by queuing in packet switch networks. Hence, this buffer allows for a continuous play-out of audio or video streams transmitted over the network.

The term "monitored buffer delay" in underlying disclosure should be understood as the buffer delay or 'buffer size' as monitored or observed at a certain moment. This delay is determined by the buffer synchronization agent and is typically expressed in ms. For instance these values can be obtained by calling software programmed functions.

The term "common delay" in underlying disclosure should be understood as a delay which is enforced to and thereby common for the one or more low priority buffers, the one or more high priority buffers and audio buffer of the networking device.

The term "error concealment" in underlying disclosure should be understood as a technique whereby an error (e.g. packet loss) in a video stream is replaced by synthetic content, in an attempt to produce a more pleasant experience for the viewer. An example of error concealment could be an interpolation based on other content, frames or packets in the corresponding video stream.

According to an embodiment, the networking device further comprises an audio buffer for buffering packets of an audio stream, received from the network by the network interface, the audio buffer having an audio buffer delay, wherein the buffer synchronization agent is configured to monitor the buffer delay of the audio buffer, and wherein the buffer synchronization agent is configured to enforce the determined common delay b* to the audio buffer, where the common delay b* is used as the audio buffer delay.

The audio stream or signal comprises relevant information and is important for the continuity of e.g. real-time streaming. The buffer synchronization agent monitors the buffer delays of the audio stream, low and high priority video streams and coordinates the jitter buffers in a way that packets with low-priority content are dropped for interactivity optimization. This means that, upon receiving the audio packets to be played out, the synchronization agent checks the video data that should be synchronized with the audio packets. Instead of waiting for the arrival of a late packet with low priority content, e.g. packets comprising static background content, the agent determines to reduce the common buffer delay so as to improve the interactivity.

According to an embodiment, the determined common delay b* also equals or exceeds the monitored buffer delay of the audio buffer and, equals or exceeds a minimum value bₘᵢₙ. Preferably, the minimum jitter buffer delay bₘᵢₙ is dependent on the buffering status or buffer delay of the audio buffer.

The play-out time of the audio stream is determined by keeping the intra-stream synchronization errors (e.g. packet de-jittering and audio temporal relationship reconstruction) as low as possible.

Therefore assigning higher priority to the audio stream than for the video streams, is advantageous as the audio stream or signal comprises relevant information and is important for the continuity of the conference.

The minimum jitter buffer delay bₘᵢₙ allows for a smooth playout of the audio stream.

According to an embodiment, the common delay b* maximally is determined to a value bₘₐₓ, whereby bₘₐₓ preferably is situated between 20ms and 150ms.

As the common buffer delay will not exceed bₘₐₓ, impairment of interactivity is limited in a trade off with quality of the streams.

According to an embodiment, if a monitored low priority buffer delay exceeds the monitored high priority buffer delays, the buffer synchronization agent is adapted to determine the common delay b* sufficiently low while not exceeding a level of distortion d₀ for the buffered low priority video stream and/or for the combined stream.

This way, a user or system could set a personalized level of distortion for a video streaming session, e.g. via a user interface. This allows for a more adaptive implementation for the trade-off between interactivity and video quality.

According to an embodiment, the networking device is configured to apply error concealment to the low priority content or frames of the combined video stream, if the determined common delay b* is smaller than a monitored low priority buffer delay and wherein the monitored low priority buffer delay exceeds the monitored high priority buffer delays.

As the common buffer delay is decreased at the expense of the monitored buffer delay of the low priority buffer, interactivity increases, but video quality could deteriorate. Error concealment is advantageous as it compensates for the decreased video quality.

According to an embodiment, the networking device is configured to provide the combined video stream and/or audio stream to a device suitable for playing the combined video stream and/or audio stream.

According to an embodiment, the network interface is configured to receive one or more streams of the one or more high priority video streams over the network via one or more ports of the network interface, separate from a port for receiving one or more streams of said one or more low priority video streams. Possibly the network interface is configured to receive the one or more streams of the one or more high priority video streams via one or more corresponding network paths with a lower congestion level than the network paths corresponding to the one or more low priority video streams.

This differentiated quality attribution allows to provide better quality to more prioritized regions and therefore high priority streams, in response of lower network congestion. Hereto, e.g. "differentiated services" (DiffServ) could provide differentiated QoS to the network paths. A "new payload type" of the transport protocol can be issued to identify both types of video streams.

According to an embodiment, the network interface is configured to receive the audio stream over the network via a port of the network interface, separate from one or more ports for receiving the video streams. Possibly the network interface is configured to receive the audio stream via a corresponding network path with a lower congestion level than the network paths corresponding to the video streams.

This differentiated quality attribution allows to provide better quality to the audio stream, which is important for the continuity of the video streaming or conference.

According to an embodiment, the networking device is configured to receive a high priority video stream with a higher quality than the one or more low priority video streams, in case of degraded network congestion. The quality can for instance correspond to an encoding level. Possibly the quality is inversely proportional to a congestion level of a network path of the network for the stream.

Indeed, encoding allows compression of video data and therefore influences the amount of packets to be sent over the network. Typical encoding standards could be e.g. H.264/MPEG-4 AVC, H.265/MPEG-H HEVC, etc. A higher encoding level corresponds to a denser compression with higher susceptibility for visible or distracting artefacts due to noise from the network and hereby deteriorates quality of the video streams.

According to an embodiment, the networking device is configured to receive video streams from multiple senders, wherein the networking device is configured to perform the buffer management per sender, per group of one or more senders, or, for one sender of focus.

The network paths between the network device and the multiple senders will likely have different characteristics in bandwidth, latency, jitter, etc. In order to accommodate to the senders, the network device possibly is configured to take into account different sender requirements and to provide different or several media encodings. Each of the senders can e.g. have corresponding low and high priority video streams, which can be visualized at the receiver side, either individually (e.g. PiP or PaP together with sender of focus) or simultaneously (e.g. grid like manner).

In case of buffer management per group of one or more senders, adapting the quality for a group of senders is advantageous as it allows for efficient multiparty conferencing or distribution. As there can be a significant amount of receivers and e.g. corresponding RTCP reports, or reports from any other supporting transport protocols, with each individual settings, grouping senders allows for a reduced set of low priority and high priority encodings to be applied and to be sent to the appropriate receiver(s). Hence, common quality for audio and/or video streams can be set for all senders in a group.

In case of multiparty conferencing, the receiver needs to deal with multiple senders in the conference. Typically, one of the senders will have the focus, whereby the other senders are of less importance in the overall conference. The notion of focus can relate to the audio stream of a sender. Nevertheless, audio streams of all contributing parties could be mixed.

In case of buffer management for a sender of focus, the networking device is configured to receive the audio stream, low priority and high priority video streams from the sender of focus and to provide feedback for these streams. The other senders can be handled in a more conservative way. The advantage is a more limited amount of control to be taken care of at receiver and sender side.

In case of buffer management per sender, the networking device is configured to receive audio streams, low priority and high priority video streams from all senders in the multiparty video conference. Possibly the network device reports back to all senders in order to optimize the communication with all senders. The advantage of this approach is that changing focus in the conference does not exhibit any effect on QoE for the receiver since all communication with all senders can be adapted optimally. Nevertheless, the amount of control increases at receiver and sender side.

In a second aspect, embodiments of the present invention relate to a method, according to independent claim 12, for buffer management in video streaming over a network. The method comprises the receiving of one or more video streams from a network. Some of the received one or more video streams are one or more low priority video streams containing low priority content and some of the received one or more video streams are one or more high priority video streams containing high priority content. Further, the method buffers packets of the one or more low priority video streams respectively into one or more low priority buffers, each low priority buffer having a respective low priority buffer delay, and buffers packets of the one or more high priority video streams respectively into one or more high priority buffers, each high priority buffer having a respective high priority buffer delay. Buffer delays of the buffers are monitored in order to determine a common delay b* for the buffers, wherein b* is smaller than a monitored low priority buffer delay and greater than or equal to monitored high priority buffer delays if the monitored low priority buffer delay exceeds the monitored high priority buffer delays. The determined common delay b* is then enforced to the buffers by using the common delay b* as the low priority buffer delays for the one or more low priority buffer and using the common delay b* as the high priority buffer delays for the one or more high priority buffers. The packets of the one or more low priority and the one or more high priority buffers are combined into the frames of a combined video stream.

According to an embodiment, the method further comprises the buffering of packets of an audio stream received from the network. Also the buffer delay of the audio buffer agent is monitored and the determined common delay b* is enforced to the audio buffer.

In a third aspect, the disclosure relates to a computer program product, according to independent claim 13, comprising computer-executable instructions for performing the method according to the second aspect when the program is run on a computer.

In a fourth aspect, the disclosure relates to a computer readable storage medium, according to independent claim 14, comprising the computer program product according to the third aspect.

Further embodiments are set out in the dependent claims.

### Brief Description of the Drawings

Fig. 1 illustrates a networking device according to an embodiment of the invention; and
Fig. 2 illustrates steps performed by a buffer synchronization agent for the networking device in Fig. 1.

### Detailed Description of Embodiment(s)

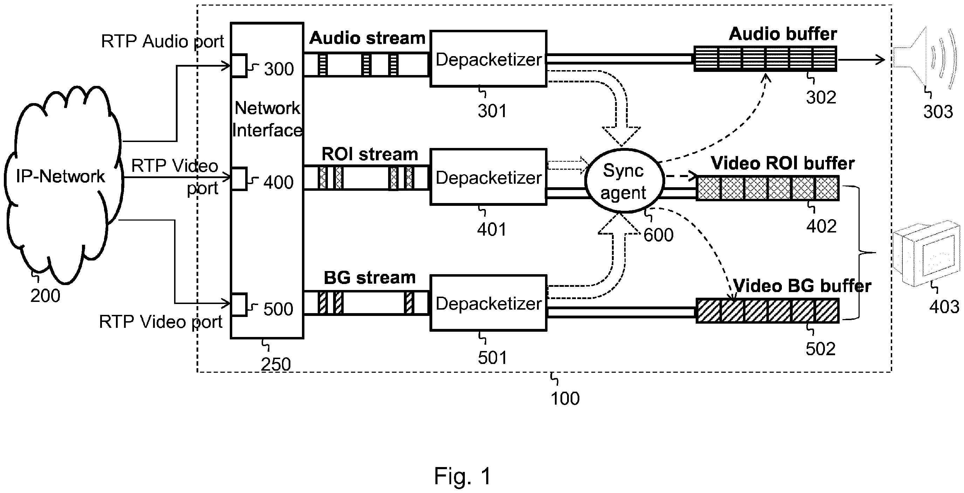

Fig. 1 illustrates a networking device 100 according to an embodiment of the invention.

The networking device 100 comprises a network interface 250 for receiving an audio stream, a region-of-interest (ROI) stream and a background (BG) stream from a network 200 via respectively separate (e.g. RTP) ports 300, 400 and 500. Hereby, differentiated services (e.g. "DiffServ" for RTP-communication) can be employed to the audio, ROI and BG stream, whereby the audio stream is received via a network path with an equal or lower congestion level than with the network path for the ROI stream, and also whereby the ROI stream is received via a network path with an equal or lower congestion level than with the network path for the BG stream. The BG video stream corresponds to low priority content and the ROI video stream corresponds to high priority content.

The networking device 100 comprises depacketizers 301, 401 and 501 for respectively depacketing the respectively audio stream, ROI stream and BG stream and subsequently provide the depacketed streams to the respective audio buffer 302, ROI video buffer 402 and BG video buffer 502.

The receiving device 100 comprises the buffer management agent 600 suitable for determining the common delay b* according to the importance of the streams when reconstructing the audio/video content at the receiver 100. The received audio stream is purposed to have the minimum buffer delay of the monitored buffer delays. In this embodiment, the ROI and BG streams comprise the necessary metadata to compose the final video output at the receiver side. These operations are performed by a video composer that takes the available decoded BG and ROI streams as input and produces frames to be displayed according to the playing device capabilities and according to the metadata on how to merge the ROI and BG decoded video stream as frames to be displayed. The resulting audio stream and video stream are played out by respectively an audio player 303 and a video player 403.

The synchronization agent 600 maintains a tuneable parameter α corresponding to a level of interactivity of the audio/video communication. The value of α is in the range of [1, bₘₐₓ/bₐ] so that the negotiated common buffer delay b* never exceeds bₘₐₓ.

The value of d₀ corresponds to a tolerance of the end-user to the level of distortion (e.g. measured by PSNR, SSIM or MOS score evaluation). Parameter d₀ concerns a configurable parameter, whereby a user can set or change the distortion level that he can tolerant e.g. via a user-interface.

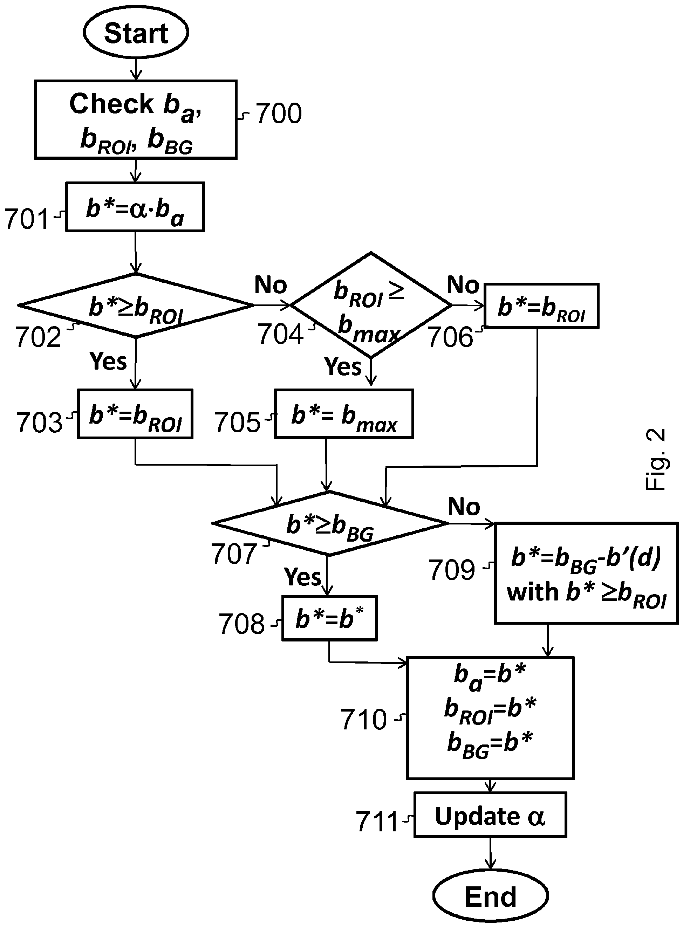

The flowchart of Fig. 2 illustrates steps performed by the buffer synchronization agent in Fig. 1.

The three delay buffers 302, 402, 502 announce (in step 700) their respectively monitored buffer delay bₐ, b_{ROI} and b_{BG} to the synchronization agent 600.

The synchronization agent 600 calculates (in step 701) a common buffer delay as b*= α-bₐ. The default value of α can be randomly chosen from the range of [1, bₘₐₓ/bₐ]. Its value is constantly updated in accordance to the ROI and BG buffer delay adapted in the previous round.

If b* ≥ b_{ROI} (checked in step 702), i.e. the estimated common buffer delay is larger than the announced ROI buffer delay b_{ROI}, the synchronization agent 600 chooses the smaller buffer delay b*= b_{ROI} (in step 703).

If b* < b_{ROI} (checked in step 702), i.e. the estimated common buffer delay is smaller than the announced ROI buffer delay b_{ROI}, the synchronization agent first checks (in step 704) whether b_{ROI} ≥ bₘₐₓ. This situation typically happens with improving network condition for delivering the ROI stream. If so, b* shall be assigned to b*= bₘₐₓ (in step 705) regardless of the distortion caused by dropping packets. This corresponds to the maximum determined buffer delay without significantly impairing the interactivity of the communication. If b_{ROI} < bₘₐₓ, the common delay is b* = b_{ROI} (in step 706), so as to maintain or guarantee that the quality of the ROI stream.

In the following step, the relationship between b* and b_{BG} is examined in step 707. If b* ≥ b_{BG}, b* keeps unchanged (in step 708), as the quality of the ROI stream is assumed to be important to the end-user. Otherwise if b*< b_{BG}, the announced BG buffer delay b_{BG} needs to be reduced. The synchronization agent 600 calculates the amount of BG buffer delay b'(d), to be reduced as a function of the imposed distortion (e.g. after error concealment or without concealment). This reduction is so that the incurred video distortion does not exceed the distortion threshold, i.e. d ≤ d₀. The common buffer delay is thereby assigned as b*= b_{BG} - b'(d), with b* ≥ b_{ROI} (in step 709).

Subsequently, the three buffers are enforced with the common buffer delay b* in step 710, whereafter α is updated in step 711.

In an alternative embodiment only bₐ and b_{ROI} are considered to determine the common buffer delay b*, whereby b_{BG} is proportional to b_{ROI}. This corresponds to the flowchart of Fig. 2 without steps 707, 708 and 709.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. It is to be understood that the terms so used are interchangeable under appropriate circumstances and embodiments of the invention are capable of operating according to the present invention in other sequences, or in orientations different from the one(s) described or illustrated above, provided they fall within the scope of the invention which is only defined by the appended claims.

## Claims

1. A networking device (100) for buffer management in video streaming over a network, said networking device (100) comprising:
- a network interface (250) for receiving one or more video streams from a network (200),
∘ some of the received one or more video streams being one or more low priority video streams containing low priority content;
∘ some of the one or more video streams being one or more high priority video streams containing high priority content;
- one or more low priority buffers (502) for buffering packets of respectively said one or more low priority video streams, each low priority buffer having a respective low priority buffer delay;
- one or more high priority buffers (402) for buffering packets of respectively said one or more high priority video streams, each high priority buffer having a respective high priority buffer delay;
- wherein said packets of said video buffers (402, 502), if combined, constitute frames of a combined video stream;
- a buffer synchronization agent (600) configured to monitor said respective low priority buffer delays and high priority buffer delays of said one or more low priority buffers and said one or more high priority buffers (402, 502) in order to determine a common delay b* and configured to determine said common delay b* for said buffers (402, 502), wherein b* is smaller than a monitored low priority buffer delay and greater than or equal to monitored high priority buffer delays of said one or more high priority buffers if said monitored low priority buffer delay exceeds the monitored high priority buffer delays, and wherein said buffer synchronization agent (600) is configured to enforce said determined common delay b* to said buffers (402, 502), where said common delay b* is used as the low priority buffer delay of said one or more low priority buffers and as the high priority buffer delay of said one or more high priority buffers;
- a composer configured to combine said packets of said video buffers (402, 502) into said frames of said combined video stream.

2. A networking device (100) according to claim 1, wherein said networking device further comprises:
- an audio buffer (302) for buffering packets of an audio stream, received from said network by said network interface (250), the audio buffer (302) having an audio buffer delay, wherein said buffer synchronization agent (600) is configured to monitor the buffer delay of said audio buffer (302), and wherein said buffer synchronization agent (600) is configured to enforce said determined common delay b* to said audio buffer (302), where the common delay b* is used as the audio buffer delay.

3. A networking device (100) according to claim 2, wherein said determined common delay b* also equals or exceeds said monitored buffer delay of said audio buffer and, equals or exceeds a minimum value bₘᵢₙ.

4. A networking device (100) according to claim 1, wherein said common delay b* maximally is determined to a value bₘₐₓ, whereby bₘₐₓ preferably is situated between 20ms and 150ms.

5. A networking device (100) according to claim 1, wherein if a monitored low priority buffer delay exceeds the monitored high priority buffer delays, said buffer synchronization agent (600) is adapted to determine said common delay b* sufficiently low while not exceeding a level of distortion d₀ for said buffered low priority video stream and/or for said combined stream.

6. A networking device (100) according to claim 1, wherein said networking device (100) is configured to apply error concealment to said low priority content or frames of said combined video stream, if said determined common delay b* is smaller than a monitored low priority buffer delay and wherein said monitored low priority buffer delay exceeds said monitored high priority buffer delays.

7. A networking device (100) according to claim 1, wherein said networking device (100) is configured to provide said combined video stream and/or audio stream to a device suitable for playing said combined video stream and/or audio stream.

8. A networking device (100) according to claim 1, wherein said network interface is configured to receive one or more streams of said one or more high priority video streams over said network via one or more ports of said network interface, separate from a port for receiving one or more streams of said one or more low priority video streams, and configured to receive said one or more streams of said one or more high priority video streams via one or more corresponding network paths with a lower congestion level than the network paths corresponding to said one or more low priority video streams.

9. A networking device (100) according to claim 2, wherein said network interface is configured to receive said audio stream over said network via a port of said network interface, separate from one or more ports for receiving said video streams, and configured to receive said audio stream via a corresponding network path with a lower congestion level than the network paths corresponding to said video streams.

10. A networking device (100) according to claim 1, wherein said networking device (100) is configured to receive a high priority video stream with a higher quality than said one or more low priority video streams, in case of degraded network congestion, wherein said quality corresponds to an encoding level, whereby said quality is inversely proportional to a congestion level of a network path of said network (200) for said stream.

11. A networking device (100) according to claim 1, wherein said networking device (100) is configured to receive video streams from multiple senders, wherein said networking device (100) is configured to perform said buffer management per sender, per group of one or more senders, or, for one sender of focus.

12. A method for buffer management in video streaming over a network (200) comprising:
- receiving one or more video streams from a network (200),:
∘ some of the received one or more video streams being one or more low priority video streams containing low priority content;
∘ some of the received one or more video streams being one or more high priority video streams containing high priority content;
- buffering packets of said one or more low priority video streams respectively into one or more low priority buffers (502), each low priority buffer having a respective low priority buffer delay;
- buffering packets of said one or more high priority video streams respectively into one or more high priority buffers (402), each high priority buffer having a respective high priority buffer delay;
- wherein said packets of said video buffers (402, 502), if combined, constitute frames of a combined video stream;
- monitoring said respective low priority buffer delays and high priority buffer delays of said one or more low priority buffers and said one or more high priority buffers in order to determine a common delay b*;
- determining said common delay b* for said buffers (402, 502), wherein b* is smaller than a monitored low priority buffer delay and greater than or equal to monitored high priority buffer delays of said one or more high priority buffers if said monitored low priority buffer delay exceeds the monitored high priority buffer delays;
- enforcing said determined common delay b* to said buffers (402, 502) by using the common delay b* as the low priority buffer delays for the one or more low priority buffer and using the common delay b* as the high priority buffer delays for the one or more high priority buffers;
- combining said packets of said one or more low priority and said one or more high priority buffers into said frames of said combined video stream.

13. A computer program product comprising computer-executable instructions for performing the method according to claim 12 when the program is run on a computer.

14. A computer readable storage medium comprising the computer program product according to claim 13.

## Patentansprüche

1. Netzwerkvorrichtung (100) zum Verwalten von Puffern beim Video-Streaming über ein Netzwerk, wobei besagte Netzwerkvorrichtung (100) Folgendes umfasst:
- eine Netzwerkschnittstelle (250) zum Empfangen eines Videodatenstroms oder mehrerer Videodatenströme von einem Netzwerk (200),
∘ wobei einige des empfangenen einen Videodatenstroms oder der empfangenen mehreren Videodatenströme ein Videodatenstrom oder mehrere Videodatenströme mit niedriger Priorität sind, die Inhalte mit niedriger Priorität enthalten;
∘ wobei einige des einen Videodatenstroms oder der mehreren Videodatenströme ein Videodatenstrom oder mehrere Videodatenströme mit hoher Priorität sind, die Inhalte mit hoher Priorität enthalten;
- einen Puffer oder mehrere Puffer mit niedriger Priorität (502) zum Puffern von Paketen des jeweils einen Videodatenstroms oder der jeweils mehreren Videodatenströme mit niedriger Priorität, wobei jeder Puffer mit niedriger Priorität eine jeweilige Pufferverzögerung mit niedriger Priorität aufweist;
- einen Puffer oder mehrere Puffer mit hoher Priorität (402) zum Puffern von Paketen des jeweils einen Videodatenstroms oder der mehreren Videodatenströme mit hoher Priorität, wobei jeder Puffer mit hoher Priorität eine jeweilige Pufferverzögerung mit hoher Priorität aufweist;
- wobei die Pakete der Videopuffer (402, 502), wenn sie kombiniert sind, Frames eines kombinierten Videodatenstroms bilden;
- ein Puffersynchronisationsmittel (600), das zum Überwachen der jeweiligen Pufferverzögerungen mit niedriger Priorität und Pufferverzögerungen mit hoher Priorität von dem einen Puffer oder den mehreren Puffern mit niedriger Priorität und dem einen Puffer oder den mehreren Puffern mit hoher Priorität (402, 502) dafür konfiguriert ist, eine gemeinsame Verzögerung b* zu bestimmen und dafür konfiguriert ist, die gemeinsame Verzögerung b* für die Puffer (402, 502) zu bestimmen, wobei b* kleiner als eine überwachte Pufferverzögerung mit niedriger Priorität und größer oder gleich wie überwachte Pufferverzögerungen mit hoher Priorität des einen Puffers oder der mehreren Puffer mit hoher Priorität ist, wenn die überwachte Pufferverzögerung mit niedriger Priorität die überwachten Pufferverzögerungen mit hoher Priorität überschreitet, und wobei der Puffersynchronisationsagent (600) dafür konfiguriert ist, die bestimmte gemeinsame Verzögerung b* für die Puffer (402, 502) zu erzwingen, wobei die gemeinsame Verzögerung b* als Pufferverzögerung mit niedriger Priorität des einen Puffers oder der mehreren Puffer mit niedriger Priorität und als die Pufferverzögerung mit hoher Priorität des einen Puffers oder der mehreren Puffer mit hoher Priorität verwendet wird;
- einen Composer, der dafür konfiguriert ist, die besagten Pakete der Videopuffer (402, 502) mit den Frames des kombinierten Videodatenstroms zu kombinieren.

2. Netzwerkvorrichtung (100) nach Anspruch 1, wobei besagte Netzwerkvorrichtung ferner Folgendes umfasst:
- einen Audiopuffer (302) zum Puffern von Paketen eines Audiodatenstroms, die vom besagten Netzwerk von der Netzwerkschnittstelle (250) empfangen werden, wobei der Audiopuffer (302) eine Audiopufferverzögerung aufweist, wobei der besagte Puffersynchronisationsagent (600) zum Überwachen der Pufferverzögerung des Audiopuffers (302) konfiguriert ist, und wobei der besagte Puffersynchronisationsagent (600) dafür konfiguriert ist, die besagte bestimmte gemeinsame Verzögerung b* bei dem Audiopuffer (302) durchzusetzen, wobei die gemeinsame Verzögerung b* als Audiopufferverzögerung verwendet wird.

3. Netzwerkvorrichtung (100) nach Anspruch 2, wobei die besagte bestimmte gemeinsame Verzögerung b* gleich der überwachten Pufferverzögerung des besagten Audiopuffers ist oder diese überschreitet und gleich dem Minimalwert bmin ist oder diesen überschreitet.

4. Netzwerkvorrichtung (100) nach Anspruch 1, wobei die besagte gemeinsame Verzögerung b* maximal auf einen Wert bmax bestimmt ist, wobei bmax vorzugsweise zwischen 20 ms und 150 ms liegt.

5. Netzwerkvorrichtung (100) nach Anspruch 1, wobei, wenn eine überwachte Pufferverzögerung mit niedriger Priorität die überwachten Pufferverzögerungen mit hoher Priorität überschreitet, der besagte Puffersynchronisationsagent (600) angepasst ist, um die gemeinsame Verzögerung b* ausreichend niedrig zu bestimmen, während ein Verzerrungspegel d0 für den besagten gepufferten Videodatenstrom mit niedriger Priorität und/oder für den kombinierten Datenstrom nicht überschritten wird.

6. Netzwerkvorrichtung (100) nach Anspruch 1, wobei die besagte Netzwerkvorrichtung (100) zum Anwenden der Fehlerverdeckung bei besagten Inhalten mit niedriger Priorität oder Frames des besagten kombinierten Videodatenstroms konfiguriert ist, wenn die besagte bestimmte gemeinsame Verzögerung b* kleiner als eine überwachte Pufferverzögerung mit niedriger Priorität ist, wobei die besagte überwachte Pufferverzögerung mit niedriger Priorität die besagten überwachten Pufferverzögerungen mit hoher Priorität überschreitet.

7. Netzwerkvorrichtung (100) nach Anspruch 1, wobei die besagte Netzwerkvorrichtung (100) dafür konfiguriert ist, den besagtem kombinierten Videodatenstrom und/oder Audiodatenstrom einer Vorrichtung bereitzustellen, die für das Abspielen des besagten kombinierten Videodatenstroms und/oder Audiodatenstroms geeignet ist.

8. Netzwerkvorrichtung (100) nach Anspruch 1, wobei die besagte Netzwerkschnittstelle dafür konfiguriert ist, einen Datenstrom oder mehrere Datenströme des einen besagten Videodatenstroms oder der mehreren Videodatenströme mit hoher Priorität über das besagte Netzwerk über einen Port oder mehrere Ports der Netzwerkschnittstelle getrennt von einem Port zum Empfangen von einem Datenstrom oder mehreren Datenströmen des einen Videodatenstroms oder der mehreren Videodatenströme mit niedriger Priorität zu empfangen und dafür konfiguriert ist, den einen besagten Datenstrom oder die mehreren Datenströme des einen Videodatenstroms oder der mehreren Videodatenströme mit hoher Priorität über einen entsprechenden Netzwerkpfad oder mehrere entsprechende Netzwerkpfade mit einem niedrigeren Überlastungsgrad als die Netzwerkpfade, die dem einen Videodatenstrom oder den mehreren Videodatenströmen mit niedriger Priorität entsprechen, zu empfangen.

9. Netzwerkvorrichtung (100) nach Anspruch 2, wobei die Netzwerkschnittstelle dafür konfiguriert ist, um den Audiostrom über das Netzwerk über einen Port der Netzwerkschnittstelle getrennt von einem Port oder mehreren Ports für das Empfangen der Videodatenströme zu empfangen, und dafür konfiguriert ist, den Audiostrom über einen entsprechenden Netzwerkpfad mit einem niedrigeren Überlastungsgrad als die Netzwerkpfade, die den Videodatenströmen entsprechen, zu empfangen.

10. Netzwerkvorrichtung (100) nach Anspruch 1, wobei die besagte Netzwerkvorrichtung (100) dafür konfiguriert ist, um einen Videodatenstrom mit einer hohen Priorität mit einer höheren Qualität zu erhalten, als einen Videodatenstrom oder mehrere Videodatenströme mit niedriger Priorität, im Fall einer Überlastung aufgrund beeinträchtigter Netzwerkleistung, wobei die besagte Qualität einem Codierungsniveau entspricht, wobei die besagte Qualität umgekehrt proportional zu einem Überlastungsniveau eines Netzwerkpfads des Netzwerks (200) für den besagten Strom ist.

11. Netzwerkvorrichtung (100) nach Anspruch 1, wobei die besagte Netzwerkvorrichtung (100) dafür konfiguriert ist, Videodatenströme von mehreren Sendern zu empfangen, wobei die besagte Netzwerkvorrichtung (100) dafür konfiguriert ist, das besagte Verwalten von Puffern pro Sender pro Gruppe von einem oder mehreren Sendern oder für einen Schwerpunkt-Sender durchzuführen.

12. Verfahren zum Verwalten von Puffern bei dem Videostreaming über ein Netzwerk (200), das Folgendes umfasst:
- Empfangen von einem oder mehreren Videodatenströmen von einem Netzwerk (200):
o wobei einige des empfangenen einen Videodatenstroms oder der empfangenen mehreren Videodatenströme ein Videodatenstrom oder mehrere Videodatenströme mit niedriger Priorität sind, die Inhalte mit niedriger Priorität enthalten;
o wobei einige des empfangenen einen Videodatenstroms oder der empfangenen mehreren Videodatenströme ein Videostrom oder mehrere Videodatenströme mit hoher Priorität sind, die Inhalte mit hoher Priorität enthalten;
- Puffern von Paketen von dem einen Videodatenstrom oder den mehreren Videodatenströmen mit niedriger Priorität jeweils in einen oder in mehrere Puffer mit niedriger Priorität (502), wobei jeder Puffer mit niedriger Priorität eine entsprechende Pufferverzögerung mit niedriger Priorität aufweist;
- Puffern von Paketen von dem einen Videodatenstrom oder den mehreren Videodatenströmen mit hoher Priorität jeweils in einen oder in mehrere Puffer mit hoher Priorität (402), wobei jeder Puffer mit hoher Priorität eine entsprechende Pufferverzögerung mit hoher Priorität aufweist;
- wobei die Pakete der Videopuffer (402, 502), wenn sie kombiniert sind, Frames eines kombinierten Videodatenstroms bilden;
- Überwachen der jeweiligen besagten Pufferverzögerungen mit niedriger Priorität und der Pufferverzögerungen mit hoher Priorität des einen Puffers oder der mehreren Puffer mit niedriger Priorität und des einen Puffers oder der mehreren Puffer mit hoher Priorität, um eine gemeinsame Verzögerung b* zu bestimmen;
- Bestimmen der gemeinsamen Verzögerung b* für die Puffer (402, 502), wobei b* kleiner als eine überwachte Pufferverzögerung mit niedriger Priorität und größer als eine überwachte oder gleich einer überwachten Pufferverzögerung hoher Priorität von dem einen Puffer oder den mehreren Puffern mit hoher Priorität ist, wenn die überwachte Pufferverzögerung mit niedriger Priorität die überwachten Pufferverzögerungen mit hoher Priorität überschreitet;
- Erzwingen der bestimmten gemeinsamen Verzögerung b* bei den Puffern (402, 502) durch Verwenden der gemeinsamen Verzögerung b* als Pufferverzögerungen mit niedriger Priorität für den einen oder die mehreren Puffer mit niedriger Priorität und Verwenden der gemeinsamen Verzögerung b* als die Pufferverzögerungen mit hoher Priorität für den einen oder die mehreren Puffer mit hoher Priorität;
- Kombinieren der besagten Pakete von dem einen Puffer oder den mehreren Puffern mit niedriger Priorität und dem einem Puffer oder den mehreren Puffern mit hoher Priorität in den Frames des besagten kombinierten Videodatenstroms.

13. Computerprogrammprodukt, das computerausführbare Anweisungen zum Durchführen des Verfahrens nach Anspruch 12 umfasst, wenn das Programm auf einem Computer ausgeführt wird.

14. Computerlesbares Speichermedium, welches das Computerprogrammprodukt nach Anspruch 13 umfasst.

## Revendications

1. Dispositif de réseau (100) destiné à la gestion de mémoire tampon en diffusion vidéo en continu sur un réseau, ledit dispositif de réseau (100) comprenant :
- une interface de réseau (250) permettant de recevoir au moins un flux vidéo à partir d'un réseau (200),
∘ certains parmi au moins un flux vidéo reçu étant un ou plusieurs flux vidéo de faible priorité contenant un contenu de faible priorité ;
∘ certains parmi au moins un flux vidéo étant un ou plusieurs flux vidéo de haute priorité contenant un contenu de haute priorité ;
- au moins un tampon de faible priorité (502) permettant de mettre en mémoire tampon les paquets dudit ou desdits flux vidéo de faible priorité respectifs, chaque tampon de faible priorité présentant un retard de tampon de faible priorité ;
- au moins un tampon de priorité élevée (402) permettant de mettre en mémoire tampon les paquets en mémoire tampon dudit ou desdits flux de données vidéo de haute priorité respectifs, chaque tampon de haute priorité présentant un retard de tampon de haute priorité ;
- lesdits paquets desdits tampons vidéo (402, 502), s'ils sont combinés, constituant des trames d'un flux vidéo combiné ;
- un agent de synchronisation de mémoire tampon (600) conçu pour surveiller lesdits retards de tampon de faible priorité respectifs et lesdits retards de tampon de haute priorité dudit au moins un tampon de faible priorité et dudit au moins un tampon de haute priorité (402, 502) afin de déterminer un retard commun b* et conçu pour déterminer ledit retard commun b* pour lesdits tampons (402, 502), b* étant inférieur à un retard surveillé de tampon de faible priorité et supérieur ou égal aux retards surveillés de tampon de haute priorité dudit au moins un tampon de haute priorité si ledit retard surveillé de tampon de faible priorité dépasse les retards surveillés de tampon de haute priorité, et ledit agent de synchronisation de tampon (600) étant conçu pour appliquer ledit retard commun déterminé b* auxdits tampons (402, 502), ledit retard commun b* étant utilisé en tant que retard de tampon de faible priorité dudit au moins un tampon de faible priorité et en tant que retard de tampon de haute priorité dudit au moins un tampon de haute priorité ;
- un composeur conçu pour combiner lesdits paquets desdits tampons vidéo (402, 502) en lesdites trames dudit flux vidéo combiné.

2. Dispositif de réseau (100) selon la revendication 1, ledit dispositif de réseau comprenant en outre :
- un tampon audio (302) permettant de mettre en mémoire tampon les paquets d'un flux audio, reçus dudit réseau par ladite interface de réseau (250), le tampon audio (302) ayant un retard de tampon audio, ledit agent de synchronisation de tampon (600) étant conçu pour surveiller le retard de tampon dudit tampon audio (302), et ledit agent de synchronisation tampon (600) étant conçu pour appliquer ledit retard commun déterminé b* audit tampon audio (302), où le retard commun b* est utilisé en tant que retard de tampon audio.

3. Dispositif de réseau (100) selon la revendication 2, dans lequel ledit retard commun déterminé b* est également égal ou supérieur audit retard surveillé de tampon dudit tampon audio et est égal ou supérieur à une valeur minimale bmin.

4. Dispositif de réseau (100) selon la revendication 1, dans lequel ledit retard commun b* est déterminé à une valeur maximale bmax, bmax étant comprise de préférence entre 20 ms et 150 ms.

5. Dispositif de réseau (100) selon la revendication 1, dans lequel, si un retard surveillé de tampon de faible priorité dépasse les retards surveillés de tampon de haute priorité, ledit agent de synchronisation de tampon (600) est adapté pour déterminer ledit retard commun b* suffisamment bas sans dépasser un niveau de distorsion d0 pour ledit flux vidéo de faible priorité mis en mémoire tampon et/ou pour ledit flux combiné.

6. Dispositif réseau (100) selon la revendication 1, ledit dispositif réseau (100) étant conçu pour appliquer une dissimulation d'erreur audit contenu de priorité basse ou aux trames dudit flux vidéo combiné, si ledit retard commun déterminé b* est inférieur à un retard de tampon surveillé de faible priorité et ledit retard de tampon surveillé de faible priorité dépassant lesdits retards de tampon hautement surveillé.

7. Dispositif de réseau (100) selon la revendication 1, ledit dispositif de réseau (100) étant conçu pour fournir ledit flux vidéo et/ou flux audio combiné à un dispositif adapté à la lecture dudit flux vidéo et/ou flux audio combiné.

8. Dispositif de réseau (100) selon la revendication 1, dans lequel ladite interface de réseau est conçue pour recevoir au moins un flux dudit au moins un flux vidéo de haute priorité sur ledit réseau par l'intermédiaire d'au moins un port de ladite interface de réseau, séparée d'un port permettant de recevoir au moins un flux dudit au moins un flux vidéo de faible priorité, et conçue pour recevoir ledit au moins un flux dudit au moins un flux vidéo de haute priorité par l'intermédiaire d'au moins un chemin de réseau correspondant avec un niveau d'encombrement inférieur aux chemins de réseau correspondants audit au moins un flux vidéo de faible priorité.

9. Dispositif de réseau (100) selon la revendication 2, dans lequel ladite interface de réseau est conçue pour recevoir ledit flux audio sur ledit réseau par l'intermédiaire d'un port de ladite interface de réseau, distincte d'au moins un port permettant de recevoir lesdits flux vidéo, et conçue pour recevoir ledit flux audio par l'intermédiaire d'un chemin de réseau correspondant avec un niveau d'encombrement inférieur aux chemins de réseau correspondants auxdits flux vidéo.

10. Dispositif de réseau (100) selon la revendication 1, ledit dispositif de réseau (100) étant conçu pour recevoir un flux vidéo de haute priorité avec une qualité supérieure à celle dudit au moins un flux vidéo de faible priorité, en cas d'encombrement du réseau dégradé, ladite qualité correspondant à un niveau de codage, moyennant quoi ladite qualité est inversement proportionnelle à un niveau d'encombrement d'un chemin de réseau dudit réseau (200) pour ledit flux.

11. Dispositif de réseau (100) selon la revendication 1, ledit dispositif de réseau (100) étant conçu pour recevoir des flux vidéo de plusieurs expéditeurs, ledit dispositif de réseau (100) étant conçu pour effectuer ladite gestion de mémoire tampon par émetteur, par groupe d'au moins un expéditeur, ou pour un expéditeur de focalisation.

12. Procédé de gestion de mémoire tampon en diffusion vidéo en continu sur un réseau (200) comprenant :
- la réception d'au moins un flux vidéo d'un réseau (200) :
∘ certains parmi au moins un flux vidéo reçu étant un ou plusieurs flux vidéo de faible priorité contenant un contenu de faible priorité ;
∘ certains parmi au moins un flux vidéo reçu étant au moins un flux vidéo de haute priorité contenant un contenu de haute priorité ;
- la mise en mémoire tampon des paquets dudit au moins un flux vidéo de faible priorité, respectivement, dans au moins un tampon de faible priorité (502), chaque tampon de faible priorité ayant un retard de mémoire tampon de faible priorité respectif ;
- la mise en mémoire tampon des paquets dudit au moins un flux vidéo de haute priorité respectivement dans au moins un tampon de haute priorité (402), chaque tampon de haute priorité ayant un retard de mémoire tampon de haute priorité respectif ;
- lesdits paquets desdits tampons vidéo (402, 502), s'ils sont combinés, constituant des trames d'un flux vidéo combiné ;
- la surveillance des retards respectifs des tampons de faible priorité et des tampons de haute priorité dudit au moins un tampon de faible priorité et dudit au moins un tampon de haute priorité, afin de déterminer un retard commun b* ;
- la détermination dudit retard commun b* pour lesdits tampons (402, 502), b* étant inférieur à un retard surveillé de faible priorité et supérieur ou égal aux retards surveillés de haute priorité dudit au moins un tampon de haute priorité si ledit retard surveillé de tampon de basse priorité dépasse les retards surveillés de tampon de haute priorité ;
- le fait d'imposer ledit retard commun déterminé b* auxdits tampons (402, 502) en utilisant le retard commun b* en tant que retard de tampon de faible priorité pour l'au moins un tampon de faible priorité et en utilisant le retard commun b* en tant que retards de tampon de haute priorité pour l'au moins un retard de tampon de haute priorité ;
- la combinaison desdits paquets dudit au moins un retard de tampon de faible priorité et dudit au moins un tampon de haute priorité en lesdites trames dudit flux vidéo combiné.

13. Programme informatique comprenant des instructions exécutables par un ordinateur permettant d'exécuter le procédé selon la revendication 12 lorsque le programme est exécuté sur un ordinateur.

14. Support de stockage lisible par ordinateur comprenant le produit de programme informatique selon la revendication 13.
